# FASCICULE DE BREVET EUROPEEN

(11) **EP 3 018 042 B1**
(45) Date de publication et mention de la délivrance du brevet: **26.07.2017**
(21) Numéro de dépôt: 15192956.9
(22) Date de dépôt: 04.11.2015
(51) Int. Cl.: B62D 29/00

(54) **PIÈCE DE VÉHICULE AUTOMOBILE THERMOPLASTIQUE MUNI D'UN ÉLÉMENT DE RENFORT MÉTALLIQUE AJOURÉ ET SURMOULÉ LOCALEMENT**
THERMOPLASTISCHES KRAFTFAHRZEUGTEIL, DAS MIT EINEM DURCHBROCHENEN, LOKAL AUFGEFORMTEN METALLVERSTÄRKUNGSELEMENT AUSGESTATTET IST
THERMOPLASTIC MOTOR VEHICLE PART PROVIDED WITH A METAL REINFORCEMENT ELEMENT THAT IS APERTURED AND OVERMOULDED LOCALLY

(30) Priorité: 07.11.2014 FR 1460800
(43) Date de publication de la demande: 11.05.2016
(73) Titulaire: COMPAGNIE PLASTIC OMNIUM, 69007 Lyon (FR)
(72) Inventeur: ROUSSEL, Thierry, 52500 MONTESSON (FR)
(74) Mandataire: Remy, Vincent Noel Paul

(56) Documents cités:
- EP-A1- 0 119 131
- EP-A1- 0 790 905
- FR-A1- 2 481 219
- FR-A1- 2 725 950
- GB-A- 2 074 515
- US-A- 3 922 429

## Description

La présente invention concerne le domaine technique des pièces de véhicules automobiles, telles qu'un ouvrant de véhicule.

Un ouvrant de véhicule automobile comprend un corps d'ouvrant, formant un élément permettant d'obturer au moins partiellement une ouverture de la caisse. Le corps est déplaçable entre une position d'obturation de l'ouverture et une position de passage dans lequel on laisse libre l'accès à l'ouverture.

On connaît notamment les ouvrants arrières de véhicule, tels que les hayons, qui se compose d'un caisson intérieur et d'une peau extérieure, constituant un panneau monobloc ou bi bloc, et intégrant en totalité ou en partie certains des équipements extérieurs visibles ou non depuis l'extérieur du véhicule (bloc optique, commande d'ouverture du hayon ou de la lunette, emblème, système de lavage-essuyage, serrure, butées, plaque d'immatriculation...).

La très grande majorité des hayons de l'état de la technique sont réalisés en acier.

Mais l'on connaît également des hayons réalisés en matière plastique, thermoplastique et/ou thermodurcissable, de façon à alléger le hayon, mais en offrant de moins bonnes performances mécaniques.

La matière thermodurcissable présente une meilleure tenue à la déformation que la matière thermoplastique, mais présente l'inconvénient d'être plus dense. La matière **thermoplastique** présente une faible limite élastique (début de déformation plastique à basse contrainte) et donc une résistance à la rupture relativement basse et peut être sujette à une fatigue mécanique au cours de son utilisation. Or, comme tous les ouvrants d'un véhicule, les ouvrants réalisés en matériau thermoplastique sont soumis à des normes.

Pour satisfaire aux exigences de ces normes, il est en particulier nécessaire de renforcer les zones d'attache de l'ouvrant sur le véhicule (charnières, serrure, vérins ...) afin que l'ouvrant ne se désolidarise pas du véhicule lors du test de cette norme.

Pour assurer la tenue géométrique d'un caisson intérieur réalisé en matière thermoplastique tout au long de sa durée d'utilisation, malgré les nombreuses opérations d'ouverture et de fermeture qu'il subit, il est connu de rapporter sur le caisson intérieur en matière thermoplastique un ou plusieurs renforts métalliques de grande dimension.

Un inconvénient majeur de ces solutions est qu'elles augmentent la masse de l'ouvrant réalisé en matériau plastique. Or le but de l'utilisation d'un tel matériau est d'alléger in fine la pièce finale.

Par ailleurs, il peut exister un problème d'adhérence entre le renfort métallique et la résine thermoplastique qui le contient. De ce fait, le renfort peut bouger et ne plus assurer correctement sa fonction dans la zone de fortes sollicitations mécaniques.

L'invention a pour but de remédier à ces inconvénients en fournissant un ouvrant de véhicule automobile en matière thermoplastique comportant un renfort métallique local de type métal déployé dans les zones de fortes sollicitations.

De façon générale, l'objet de l'invention concerne un ouvrant de véhicule automobile muni d'au moins un élément en matière thermoplastique comportant au moins une zone de fortes sollicitations mécaniques. L'élément thermoplastique comporte au moins un élément de renfort métallique surmoulé localement, au moins dans ladite zone de fortes sollicitations mécaniques, et le renfort métallique comporte un ensemble de lumières réparties sur une majorité de la surface dudit renfort.

Un tel renfort métallique, surmoulé à une pièce thermoplastique, permet de renforcer cette pièce vis-à-vis de sollicitations mécaniques importantes, au sens où l'absence de renfort pourrait détériorer cette pièce.

Un tel renfort est plus léger qu'un renfort classique (en tôle pleine sans ajours), et conserve donc l'intérêt d'utiliser une matière thermoplastique. En effet, les lumières sont réalisées volontairement et en grand nombre, à la différence d'une pièce en tôle ne comportant que quelques orifices, pour y fixer les charnières par exemple.

Un autre avantage d'un tel renfort est relatif à la stabilité dimensionnelle de l'ouvrant. En effet, les ouvrants de véhicules doivent répondre à des exigences dimensionnelles qui se traduisent par un respect des jeux et des affleurements avec les différentes pièces de leur voisinage une fois monté sur le véhicule. Ces dimensions de l'ouvrant permettant de préserver les jeux et affleurements doivent être conservées, quelle que soit la température à laquelle est soumis le véhicule. Il est donc nécessaire que l'ouvrant conserve au mieux ses dimensions dans une gamme de température compatibles avec celles d'utilisation d'un véhicule. Le surmoulage d'un insert de type métal déployé permet d'améliorer la stabilité dimensionnelle, en ce que l'insert de part sa dilatation plus faible que la matière thermoplastique va limiter la dilatation de la résine thermoplastique à laquelle il adhère.

Enfin, les lumières du renfort métallique permettent une meilleure liaison de la matière thermoplastique au renfort métallique, car cette matière pénètre et traverse les lumières. En effet, les lumières permettent des recollements de matière faisant de multiples ponts mécaniques entre les deux faces du renfort, et elles permettent ainsi d'éviter un délaminage entre l'insert tôle et son surmoulage, qui peut se produire avec une surface non ajourée.

Un dernier avantage apporté par un tel renfort métallique est qu'il est plus facilement déformable qu'un renfort classique. De ce fait, le préformage est plus facile, voire inutile, car le renfort peut alors être moulé directement dans le moule.

Selon l'invention, la zone peut être une zone de fortes sollicitations mécaniques et/ou une zone de variations dimensionnelles due à une dilatation thermique.

Selon l'invention, l'élément de renfort métallique est une plaque en métal déployé.

Selon un mode de réalisation, l'élément de renfort métallique est préformé de façon à épouser la forme de l'élément en matière thermoplastique.

La pièce selon l'invention peut être un ouvrant de véhicule ou une face avant de véhicule.

L'invention concerne également un procédé de fabrication d'une partie d'une pièce de véhicule automobile, tel qu'un ouvrant, dans lequel on réalise par moulage au moins un élément en matière thermoplastique destiné à être assemblé pour constituer ladite pièce, caractérisé en ce que l'on réalise les étapes suivantes :
- on réalise un renfort métallique en réalisant un ensemble de lumières dans une plaque métallique, les lumières étant réparties sur une majorité de la surface de la plaque métallique le renfort métallique étant constitué d'une plaque en métal deployé;
- on sélectionne au moins une zone de l'élément en matière thermoplastique ; et
- on surmoule localement ledit un renfort métallique dans ladite zone.

La zone peut être choisie seule ou en combinaison parmi le type de zone suivant : zone de fortes sollicitations mécaniques et zone de variations dimensionnelles.

Selon l'invention, le renfort métallique peut être un grillage, ou une plaque en métal déployé.

Enfin, selon un mode de réalisation, on réalise un préformage du renfort métallique de façon à épouser, dans la zone, la forme de l'élément en matière thermoplastique.

L'invention sera mieux comprise à la lecture des figures annexées, qui sont fournies à titre d'exemples et ne présentent aucun caractère limitatif, dans lesquelles :
La figure 1 illustre un exemple d'ouvrant selon l'invention.
La figure 2 illustre un exemple d'élément de renfort métallique sous forme de grille métallique préformée.
La figure 3 illustre un élément de renfort métallique rapporté localement sur un élément en matière thermoplastique dans une zone de fortes sollicitations mécaniques.

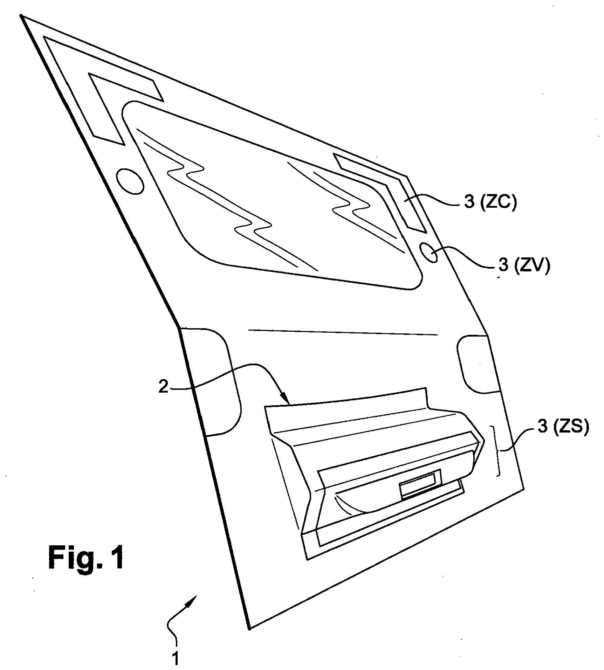

On se réfère maintenant à la figure 1 qui illustre un exemple d'ouvrant (1) de véhicule automobile selon l'invention.

L'ouvrant (1) de véhicule automobile est muni d'au moins un panneau en matière thermoplastique (2). Il peut s'agir par exemple de polypropylène (PP).

Le panneau en matière thermoplastique (2) comporte au moins une zone (3) de fortes sollicitations mécaniques. On appelle zone de fortes sollicitations mécaniques, une zone dans laquelle la matière plastique subit des efforts importants lors du fonctionnement normal de l'ouvrant (1) (ouverture et fermeture de l'ouvrant), pouvant engendrer une détérioration de l'élément en matière thermoplastique (2). Ces détériorations peuvent conduire à des déformations, des ruptures, voire à une cassure de cet élément (2). Une telle cassure peut entrainer une désolidarisation de l'ouvrant (1) et du véhicule portant l'ouvrant (1). Il s'agit par exemple d'une zone d'attache (ZC) de l'ouvrant sur le véhicule, portant une charnière, une zone de serrure (ZS) ou une zone à vérin (ZV).

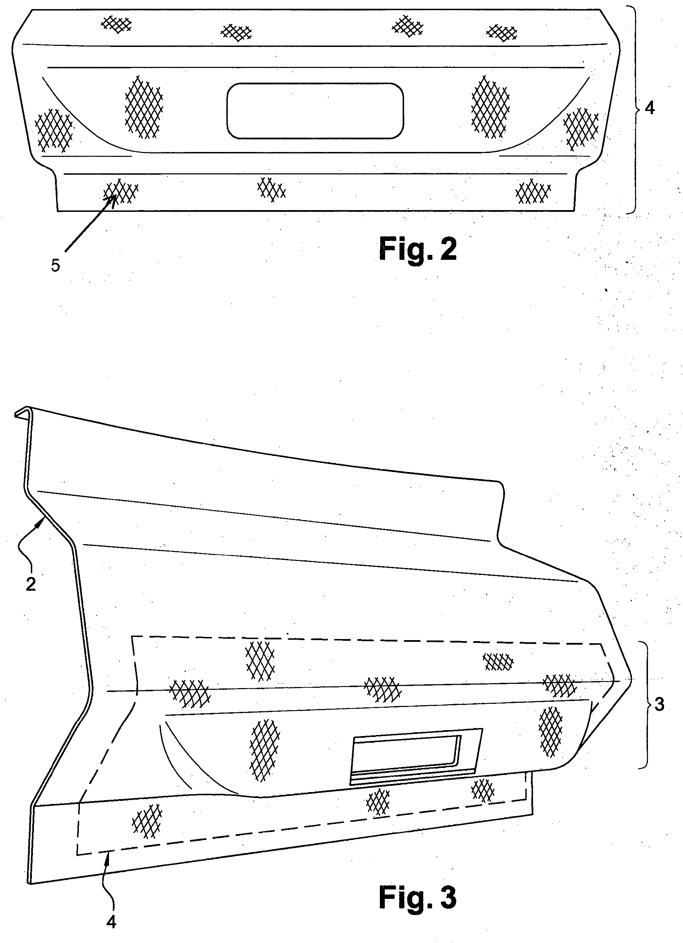

Pour renforcer cette zone (3), et ainsi éviter que l'élément en matière thermoplastique (2) ne se détériore, le panneau en matière thermoplastique (2) est équipé, au moins dans cette zone (3), d'au moins un élément de renfort (4) métallique. La figure 2 illustre un élément de renfort métallique (4) selon l'invention.

Comme l'illustre la figure 3, cet élément de renfort (4) est rapporté localement au/dans le panneau en matière thermoplastique (2) dans au moins une zone (3) de fortes sollicitations mécaniques et/ou dans une zone de fortes dilatations thermiques. De préférence, l'élément de renfort (4) est rapporté par surmoulage. Ce surmoulage peut être total ou partiel.

De préférence, l'élément de renfort (4) est préformé de façon à épouser la forme de l'élément en matière thermoplastique (2), comme l'illustre la figure 2.

L'élément de renfort (4) comporte un ensemble de lumières (5) réparties sur une majorité de la surface de l'élément de renfort (4).

Ces lumières sont réalisées volontairement et en grand nombre, à la différence d'une tôle comportant quelques orifices, pour y fixer les charnières par exemple.

De préférence, on distribue de façon homogène les lumières sur toute la surface de l'élément de renfort (4). Ainsi, le rapport de la surface de l'élément de renfort (4) sur la surface des lumières qu'il comporte peut être proche de deux par exemple.

Bien sûr, ce rapport est fonction du compromis choisi entre les propriétés de résistances mécaniques et le poids que l'on souhaite obtenir pour l'élément de renfort (4).

Ces lumières peuvent être identiques ou non en forme, taille et disposition.

Ainsi, ces nombreuses lumières permettent d'alléger l'élément de renfort (4) et donc, l'ouvrant (1), tout en conservant ses propriétés de résistance mécanique.

De plus, les lumières permettent à la matière thermoplastique, injectée lors du surmoulage de l'élément de renfort sur l'élément en matière thermoplastique (2), de s'infiltrer à travers ses lumières (5) et donc, de mieux maintenir le renfort (4) en place dans l'ouvrant (1).

Selon l'invention, le renfort métallique (4) est une plaque de métal ajourée en métal déployé. Le métal déployé est un procédé permettant de réaliser une pièce ajourée par une combinaison de d'entailles et d'étirement réalisés sur une plaque de métal.

La figure 1 illustre un ouvrant arrière de véhicule de type volet.

L'ouvrant (1) de véhicule automobile selon l'invention peut également être un hayon comportant un caisson intérieur, formant l'élément en matière thermoplastique (2), et une peau extérieure, constituant un panneau monobloc ou bi bloc, et intégrant en totalité ou en partie certains des équipements extérieurs visibles depuis l'extérieur du véhicule (bloc optique, commande d'ouverture du hayon ou de la lunette, emblème, système de lavage-essuyage, serrure, butées, plaque d'immatriculation...).

L'invention n'est pas limitée aux modes de réalisation présentés et d'autres modes de réalisation apparaîtront clairement à l'homme du métier. Il est notamment possible d'appliquer la solution à d'autres pièces automobiles, comme par exemple une face avant technique (FAT) de véhicule, que l'on renforce localement par un renfort (4) selon l'invention, notamment dans la zone d'accrochage de la serrure du capot.

Il est également possible de choisir une zone (3) de variations dimensionnelles dure à la dilatation thermique notamment. En effet, certaines pièces de véhicule automobile, telles que les ouvrants de véhicules, doivent répondre à des exigences dimensionnelles qui se traduisent par un respect des jeux et des affleurements avec les différentes pièces de leur voisinage une fois montées sur le véhicule. Ces dimensions de l'ouvrant permettant de préserver les jeux et affleurements doivent être conservées, quelle que soit la température à laquelle est soumis le véhicule. Il est donc nécessaire que l'ouvrant conserve au mieux ses dimensions dans une gamme de températures compatibles avec celles d'utilisation d'un véhicule. Le surmoulage d'un insert de type métal déployé permet d'améliorer la stabilité dimensionnelle, en ce que l'insert de par sa dilatation plus faible que la matière thermoplastique limite la dilatation de la matière thermoplastique dans laquelle il est inclus/surmoulé.

L'invention concerne également un procédé de fabrication d'une partie d'une pièce (1) de véhicule automobile, telle qu'un ouvrant, dans lequel on réalise par moulage au moins un élément en matière thermoplastique (2) destiné à être assemblé pour constituer la pièce (1), caractérisé en ce que l'on réalise les étapes suivantes :
- on réalise un renfort métallique (4) en réalisant un ensemble de lumières dans une plaque métallique, les lumières étant réparties sur une majorité de la surface de la plaque métallique, le renfort métallique (4) étant constitué d'une plaque en métal déployé;
- on sélectionne au moins une zone (3) de l'élément en matière thermoplastique (2) ; et
- on surmoule localement ledit un renfort métallique (4) dans ladite zone (3).

La zone est par exemple une zone de fortes sollicitations mécaniques. Cette zone peut également correspondre à une zone de variations dimensionnelles due à la dilatation thermique. Enfin, cette zone peut également correspondre à une zone de fortes sollicitations mécaniques et de variations dimensionnelles.

Selon ce procédé, le renfort métallique (4) est une plaque en métal déployé.

Selon un mode réalisation particulier du procédé, on réalise, avant ou pendant (simultanément) le surmoulage du renfort (4), un préformage du renfort métallique (4) de façon à épouser, dans la zone (3), la forme de l'élément en matière thermoplastique (2).

## Revendications

1. Pièce (1) de véhicule automobile muni d'au moins un élément en matière thermoplastique (2) comportant au moins un élément de renfort métallique (4) surmoulé localement au moins dans une zone (3) de l'élément thermoplastique (2), **caractérisé en ce que** l'élément de renfort métallique (4) est une plaque en métal déployé comportant un ensemble de lumières (5) réparties sur une majorité de la surface de l'élément de renfort (4).

2. Pièce (1) selon la revendication 1, dans lequel ladite zone (3) est une zone de fortes sollicitations mécaniques et/ou une zone de variations dimensionnelles due à une dilatation thermique.

3. Pièce (1) selon l'une des revendications précédentes, dans lequel l'élément de renfort métallique (4) est préformé de façon à épouser la forme dudit élément en matière thermoplastique (2).

4. Pièce (1) selon l'une des revendications précédentes, dans lequel la pièce (1) est un ouvrant de véhicule ou une face avant de véhicule.

5. Procédé de fabrication d'une partie d'une pièce (1) de véhicule automobile, tel qu'un ouvrant, dans lequel on réalise par moulage au moins un élément en matière thermoplastique (2) destiné à être assemblé pour constituer ladite pièce (1), **caractérisé en ce que** l'on réalise les étapes suivantes :
- on réalise un renfort métallique (4) en réalisant un ensemble de lumières dans une plaque métallique, les lumières étant réparties sur une majorité de la surface de la plaque métallique, le renfort métallique (4) étant constitué d'une plaque en métal déployé ;
- on sélectionne au moins une zone (3) de l'élément en matière thermoplastique (2) ; et
- on surmoule localement ledit un renfort métallique (4) dans ladite zone (3).

6. Procédé selon la revendication 5, dans lequel ladite zone est choisie seule ou en combinaison parmi le type de zone suivant : zone de fortes sollicitations mécaniques et zone de variations dimensionnelles.

7. Procédé selon l'une des revendications 5 et 6, dans lequel on réalise un préformage dudit renfort métallique (4) de façon à épouser, dans la zone (3), la forme dudit élément en matière thermoplastique (2).

## Patentansprüche

1. Teil (1) für ein Kraftfahrzeug, das mit mindestens einem Element aus thermoplastischem Material (2) versehen ist, das mindestens ein metallisches Verstärkungselement (4) aufweist, das lokal in mindestens einer Zone (3) des thermoplastischen Elements (2) aufgeformt ist, **dadurch gekennzeichnet, dass** das metallische Verstärkungselement (4) eine Platte aus Streckmetall mit einer Anordnung von Schlitzen (5) ist, die über einen überwiegenden Teil der Oberfläche des Verstärkungselements (4) verteilt sind.

2. Teil (1) nach Anspruch 1, wobei die Zone (3) eine Zone mit starken mechanischen Beanspruchungen und/oder eine Zone mit maßlichen Abweichungen bedingt durch eine thermische Ausdehnung ist.

3. Teil (1) nach einem der vorhergehenden Ansprüche, wobei das metallische Verstärkungselement (4) so vorgeformt ist, dass es sich an die Form des Elements aus thermoplastischem Material (2) anpasst.

4. Teil (1) nach einem der vorhergehenden Ansprüche, wobei das Teil (1) ein Türflügel eines Fahrzeugs oder eine Vorderseite eines Fahrzeugs ist.

5. Verfahren zur Herstellung eines Teils eines Teils (1) für ein Kraftfahrzeug, wie ein Türflügel, bei dem durch Formen mindestens ein Element aus thermoplastischem Material (2) realisiert wird, das zur Montage bestimmt ist, um das Teil (1) zu bilden, **dadurch gekennzeichnet ist, dass** die folgenden Schritte durchgeführt werden:
- Realisieren einer metallischen Verstärkung (4), indem eine Anordnung von Schlitzen in einer Metallplatte realisiert wird, wobei die Schlitze über einen überwiegenden Teil der Oberfläche der Metallplatte verteilt sind, wobei die metallische Verstärkung (4) von einer Platte aus Streckmetall gebildet ist;
- Auswählen mindestens einer Zone (3) des Elements aus thermoplastischem Material (2); und
- lokales Aufformen der einen metallischen Verstärkung (4) in der Zone (3).

6. Verfahren nach Anspruch 5, bei dem die Zone allein oder in Kombination aus dem folgenden Zonentyp ausgewählt wird: Zone mit starken mechanischen Beanspruchungen und Zone mit maßlichen Abweichungen.

7. Verfahren nach einem der Ansprüche 5 und 6, bei dem das metallische Verstärkungselement (4) so vorgeformt wird, dass es sich, in der Zone (3), an die Form des Elements aus thermoplastischem Material (2) anpasst.

## Claims

1. Motor vehicle part (1) provided with at least one element (2) made of thermoplastic material, having at least one metal reinforcement element (4) that is overmoulded locally at least in a zone (3) of the thermoplastic element (2), **characterised in that** the metal reinforcement element (4) is an expanded metal plate having a set of openings (5) distributed over a majority of the surface of the reinforcement element (4).

2. Part (1) according to claim 1, wherein said zone (3) is a zone of high mechanical stresses and/or a zone of dimensional variations due to thermal expansion.

3. Part (1) according to one of the preceding claims, wherein the metal reinforcement element (4) is preformed so as to fit the shape of said thermoplastic element (2).

4. Part (1) according to one of the preceding claims, wherein the part (1) is a vehicle opening or a vehicle front surface.

5. Method for manufacturing a motor vehicle part (1), such as an opening, wherein at least one thermoplastic element (2) intended to be assembled to form said part (1) is made by moulding, **characterised in that** the following steps are performed:
- manufacturing a metal reinforcement element (4) by making a set of openings in a metal plate, the openings being distributed over a majority of the surface of the metal plate, the metal reinforcement element (4) consisting of an expanded metal plate;
- selecting at least one zone (3) of the thermoplastic element (2); and
- overmoulding locally said one metal reinforcement element (4) in said zone (3).

6. Method according to claim 5, wherein said zone is chosen alone or in combination amongst the following type of zone: zone of high mechanical stresses and zone of dimensional variations.

7. Method according to claim 5 or 6, wherein the metal reinforcement element (4) is preformed so as to fit the shape, in zone (3), of said thermoplastic element (2).
